# EUROPEAN PATENT SPECIFICATION

(11) **EP 0 201 063 B1**
(45) Date of publication and mention of the grant of the patent: **07.07.1993**
(21) Application number: 86106066.3
(22) Date of filing: 02.05.1986
(51) Int. Cl.: G06F 15/16, G06F 9/46

(54) **Method of locating processes in a distributed data processing system**
Methode zur Lokalisierung von Prozessen in einem verteilten Datenverarbeitungssystem
Méthode de localisaton de processus dans un système réparti de traitement de données

(30) Priority: 06.05.1985 US 730621; 06.05.1985 US 730892
(43) Date of publication of application: 12.11.1986
(73) Proprietor: COMPUTER X, INC., Schaumburg Illinois 60195 (US)
(72) Inventor: Weisshaar, Bernhard Paul, Toronto Ontario M6K 1A9 (CA); Barnea, Michael, Willowdale Ontario M2H 2V7 (CA); Mansfield, Bruce Marr, Kent Washinton 98301 (US); Kolnick, Frank Charles, Willowdale Ontario M2J 2G8 (CA); Kun, Andrew Igor, Willowdale Ontario M2J 3B8 (CA)
(74) Representative: Hudson, Peter David

(56) References cited:
- EP-A- 0 074 864
- CONFERENCE PROCEEDINGS OF THE 4TH ANNUAL SYMPOSIUM ON COMPUTER ARCHITECTURE, Long Beach, 23rd-25th March 1977, pages 193-200, IEEE, New York, US; M.T. LIU et al.: "Message communication protocol and operating system design for the distributed loop computer network (DLCN)"
- THE BELL SYSTEM TECHNICAL JOURNAL, vol. 62, no. 1, part 2, January 1983, pages 303-322, American Telephone and Telegraph Co., Murray Hill, New Jersey, US; M.E. GRZELAKOWSKI et al.: "DMERT operating system"
- IBM TECHNICAL DISCLOSURE BULLETIN, vol. 23, no. 5, October 1980, pages 1811-1812, New York, US; J.G. SAMS: "Node processor for distributed system control"
- IEE PROCEEDINGS, vol. 131, no. 2, part E, section A-I, March 1984, pages 38-44, Old Woking, Surrey, GB; R. HULL et al.: "Virtual resource ring: Technique for decentralised resource management in fault-tolerant distributed computer systems"

## Description

### TECHNICAL FIELD

This invention relates generally to digital data processing, and, in particular, to a network interface module (NIM) in a distributed data processing system, in which the NIM comprises means for facilitating message transmission between processes resident on different cells in the network, and in which the NIM utilizes modes which facilitate message transmission between processes resident on different cells in the network.

### BACKGROUND OF THE INVENTION

The present invention is implemented in a distributed data processing system - that is, two or more data processing systems which are capable of functioning independently but which are so coupled as to send and receive messages to and from one another.

A Local Area Network (LAN) is an example of a distributed data processing system. A typical LAN comprises a number of autonomous data processing "cells", each comprising at least a processor and memory. Each cell is capable of conducting data processing operations independently. In addition, each cell is coupled (by appropriate means such as a twisted wire pair, coaxial cable, fiber optic cable, etc.) to a network of other cells which may be, for example, a loop, star, tree, etc., depending upon the design considerations.

As mentioned above, the present invention finds utility in such a distributed data processing system, since there is a significant need in such a system for a relatively great degree of hardware independence. Typical distributed data processing systems comprise a large variety of diverse processors, memories, operator interfaces, printers, and other peripherals. Thus there is an urgent need to provide an operating system for such a distributed data processing system, which operating system will easily accommodate different types of hardware devices without the necessity of writing and/or rewriting large portion of such operating system each time a device is added or removed from the system.

European Patent Application EP-A-0074864 and page 193-200 of the Conference Proceedings of the 4th Annual Symposium on Computer Architecture, Long Beach, 23rd-25th March 1977, IEEE, New York, US disclose methods as specified in the preambles of Claims 1 and 2.

In that prior art a message for locating processes addressed by name is broadcast to all network cells. In case the requested process is not found, the initiating cell never knows whether all other cells have been checked for presence of the requested process.

A "process", as used within the present invention, is defined as a self-contained package of data and executable procedures which operate on that data, comparable to a "task" in other known systems. Within the present invention a process can be thought of as comparable to a subroutine in terms of size, complexity, and the way it is used. The difference between processes and subroutines is that processes can be created and destroyed dynamically and can execute concurrently with their creator and other "subroutines".

Within a process, as used in the present invention, the data is totally private and cannot be accessed from the outside, i.e., by other processes. Processes can therefore be used to implement "objects" "modules", or other higher-level data abstractions. Each process executes sequentially. Concurrency is achieved through multiple processes, possibly executing on multiple processors.

Every process in the distributed data processing system of the present invention has a unique identifier (PID) by which it can be referenced. The PID is assigned by the system when the process is created, and it is used by the system to physically locate the process.

Every process also has a non-unique, symbolic "name", which is a variable-length string of characters. In general, the name of a process is known system-wide. To restrict the scope of names, the present invention utilizes the concept of a "context".

A "context" is simply a collection of related processes whose names are not known outside the context. Contexts partition the name space into smaller, more manageable subsystems. They also "hide" names, ensuring that processes contained in them do not unintentionally conflict with those in other contexts.

A process in one context cannot explicitly communicate with, and does not know about, processes inside other contexts. All interaction across context boundaries must be through a "context process", thus providing a degree of security. The context process often acts as a switchboard for incoming messages, rerouting them to the appropriate sub-processes in its context.

A context process behaves like any other process and additionally has the property that any processes which it creates are known only to itself and to each other. Creation of the process constitutes definition of a new context with the same name as the process.

Any process can create context processes. Each new context thus defined is completely contained inside the context in which it was created and therefore is shielded from outside reference. This "nesting" allows the name space to be structured hierarchically to any desired depth.

Conceptually, the highest level in the hierarchy is the system itself, which encompasses all contexts. Nesting is used in top-down design to break a system into components or "layers", where each layer is more detailed than the preceding one. This is analogous to breaking a task down into subroutines, and in fact many applications which are single tasks on known systems may translate to multiple processes in nested contexts.

A "message" is a buffer containing data which tells a process what to do and/or supplies it with information it needs to carry out its operation. Each message buffer can have a different length (up to 64 kilobytes). By convention, the first field in the message buffer defines the type of message (e.g., "read", "print", "status", "event", etc.).

Messages are queued from one process to another by name or PID. Queuing avoids potential synchronization problems and is used instead of semaphores, monitors, etc. The sender of a message is free to continue after the message is sent. When the receiver attempts to get a message, it will be suspended until one arrives if none are already waiting in its queue. Optionally, the sender can specify that it wants to wait for a reply and is suspended until that specific message arrives. Messages from any other source are not dequeued until after that happens.

Within the distributed data processing system described herein, messages are the only way for two processes to exchange data. There is no concept of a "global variable". Shared memory areas are not allowed, other than through processes which essentially "manage" each area by means of messages. Messages are also the only form of dynamic memory that the system handles. A request to allocate memory therefore returns a block of memory which can be used locally by the process but can also be transmitted to another process.

Messages provide the mechanism by which hardware transparency is achieved. A process located anywhere in the system may send a message to any other process anywhere else in the system (even on another processor and/or cell) if it knows the process name. This means that processes can be dynamically distributed across the system at any time to gain optimal throughput without changing the processes which reference them. Resolution of destinations is done by searching the process name space.

The context nesting level determines the "scope of reference" when sending messages between processes by name. From a given process, a message may be sent to all processes at its own level (i.e., in the same context) and (optionally) to any arbitrary higher level. The contexts are searched from the current context upward until a match is found. All processes with the given name at that level are then sent a copy of the message. A process may also send a message to itself or to its parent (the context process) without knowing either name explicitly, permitting multiple instances of a process to exist in different contexts, with different names.

Sending messages by PID obviates the need for a name search and ignores context boundaries. This is the most efficient method of communicating.

There is a significant need to be able to provide within a distributed data processing system the ability to easily add and delete individual cells and/or processes in the network(s) without disrupting network operations.

There is also a significant need to be able to communicate easily and quickly between processes which may be resident either in the same cell or in different cells, in a manner which is transparent to the user.

### BRIEF SUMMARY OF INVENTION

Accordingly, it is an object of the present invention to provide a distributed data processing system having an improved network interface.

It is also an object of the present invention to provide an improved network interface which facilitates message transmission between processes resident on different cells.

It is another object of the present invention to provide an improved network interface which facilitates the addition to and deletion from the network of individual cells without disrupting network operations.

It is yet another object of the present invention to provide an improved network interface which provides a message transmission mode that enables all processes with a given name to be addressed.

These and other objects are achieved in accordance with a preferred embodiment of the invention by providing a method of locating processes in a distributed data processing system, said system comprising a plurality of individual cells and at least two processes resident on different ones of said cells, the method comprising the steps of:
(a) generating a request by a first process in a first one of said cells to find the location of a second process not resident on said first cell, the method being characterised by the steps of:
(b) transmitting said request to a different one of said cells;
(c) determining whether said second process is resident on said one different cell;
(d) if said second process is resident on said one different cell, informing said first cell of the location of said one different cell; and
(e) if said second process is not resident on said one different cell, repeating steps (b) and (c) until either the location of said second process is found, in which case the first cell is informed of the location of said one different cell, or until all other cells in the system have been queried without finding the location of said second process, in which case the first cell is informed that the second process cannot be found.

### BRIEF DESCRIPTION OF THE DRAWINGS

The invention is pointed out with particularity in the appended claims. However, other features of the invention will become more apparent and the invention will be best understood by referring to the following detailed description in conjunction with the accompanying drawings in which:
FIG. 1 shows a representational illustration of a single network, distributed data processing system incorporating the improved data management system of the present invention.
FIG. 2 shows a block diagram illustrating a multiple-network, distributed data processing system incorporating the improved data management system of the present invention.
FIG. 3 shows an architectural model of a data processing system incorporating the present invention.
FIG. 4 shows the relationship between software contexts and processes as they relate to the present invention.
FIG. 5 shows how messages may be sent between processes within nested contexts.
FIG. 6 shows a conceptual view of the local area network (LAN), including several cells, and a representational view of a network interface module (NIM).
FIG. 7A shows a representation of the NIM's non-resident process name cache, and FIG. 7B shows a representation of the NIM's resident process name cache.
FIG. 8A shows the format of the discovery message.
FIG. 8B shows the format of the discovery response message.
FIG. 8C shows the format of the update cache message.

### OVERVIEW OF COMPUTER SYSTEM

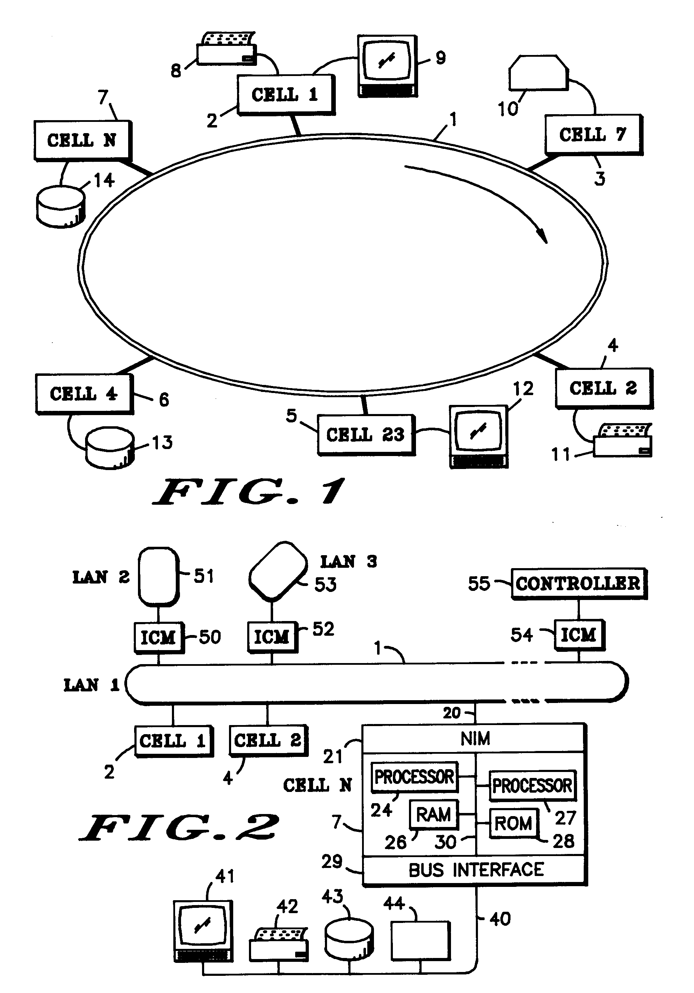

With reference to FIG. 1, a distributed computer configuration is shown comprising multiple cells 2-7 (nodes) loosely coupled by a local area network (LAN) 1. The number of cells which may be connected to the network is arbitrary and depends upon the user application. Each cell comprises at least a processor and memory, as will be discussed in greater detail with reference to FIG. 2 below. In addition, each cell may also include other units, such as a printer 8, operator display module (ODM) 9, mass memory module 13, and other I/O device 10.

With reference now to FIG. 2, a multiple-network distributed computer configuration is shown. A first local area network LAN 1 comprises several cells 2,4,and 7. LAN 1 is coupled to a second local area network LAN 2 by means of an Intelligent Communications Module (ICM) 50. The Intelligent Communications Module provides a link between the LAN and other networks and/or remote processors (such as programmable controllers).

LAN 2 may comprise several cells (not shown) and may operate under the same LAN protocol as that of the present invention, or it may operate under any of several commercially available protocols, such as Ethernet; MAP, the Manufacturing Automation Protocol of General Motors Corp.; Systems Network Architecture (SNA) of International Business Machines, Inc.; SECS-II; etc. Each ICM 50 is programmable for carrying out one of the above-mentioned specific protocols. In addition, the basic processing module of the cell itself can be used as an intelligent peripheral controller (IPC) for specialized devices.

LAN 1 is additionally coupled to a third local area network LAN 3 via ICM 52. A process controller 55 is also coupled to LAN 1 via ICM 54.

A representative cell N (7, FIG. 2) comprises a processor 24 which, in a preferred embodiment, is a Motorola 68010 processor. Each cell further includes a read only memory (ROM) 28 and a random access memory (RAM) 26. In addition, each cell includes a Network Interface Module (NIM) 21, which connects the cell to the LAN, and a Bus Interface 29, which couples the cell to additional devices within a cell. While a minimal cell is capable of supporting two peripheral devices, such as an Operator Display Module (ODM) 41 and an I/O Module 44, additional devices (including additional processors, such as processor 27) can be provided within a cell . Other additional devices may comprise, for example, a printer 42, and a mass-storage module 43 which supports a hard disk and a back-up device (floppy disk or streaming tape drive).

The Operator Display Module 41 provides a keyboard and screen to enable an operator to input information and receive visual information.

While a single cell may comprise all of the above units, in the typical user application individual cells will normally be dedicated to specialized functions. For example, one or more mass storage cells may be set up to function as data base servers. There may also be several operator consoles and at least one cell for generating hard-copy printed output. Either these same cells, or separate dedicated cells, may execute particular application programs.

The system is particularly designed to provide an integrated solution for factory automation, data acquisition, and other real-time applications. As such, it includes a full complement of services, such as a graphical output, windows, menus, icons, dynamic displays, electronic mail, event recording, and file management. Software development features include compilers, a window-oriented editor, a debugger, and performance-monitoring tools.

### Local Area Network

The local area network, as depicted in either FIG.1 or FIG. 2, ties the entire system together and makes possible the distributed virtual machine model described below. The LAN provides high throughput, guaranteed response, reliability, and low entry cost. The LAN is also autonomous, in the sense that all system and applications software is unaware of its existence. For example, any Network Interface Module (e.g. NIM 21, FIG. 2) could be replaced without rewriting any software other than that which directly drives it.

The LAN interconnection medium may be twisted-pair or coaxial cable. Two channels (logically, two distinct networks) may be provided for reliability and for increased throughput.

The LAN architecture is a logical ring, in which an electronic "token" is constantly passed from cell to cell at high speed. The current holder of the token may use it to send a "frame" of data or may pass it on to the next cell in the ring. The NIM only needs to know the logical address and status of its immediately succeeding neighbor. The NIM's responsibility is limited to detecting the failure of that neighbor or the inclusion of a new neighbor. In general, adjustment to failed or newly added cells is automatic.

The network interface maps directly into the processor's memory. Data exchange occurs through a dual-ported buffer pool which contains a linked list of pending "frames". Logical messages, which vary in length, are broken into fixed-size frames for transmission and are reassembled by the receiving NIM. Frames are sequence-numbered for this purpose. If a frame is not acknowledged within a short period of time, it is retransmitted a number of times before being treated as a failure.

As described above with reference to FIG. 2, the LAN may be connected to other LAN's operating under the same LAN protocol via so-called "bridgeways", or it may be connected to other types of LAN's via "gateways".

### Software Model

The computer operating system of the present invention operates upon processes, messages, and contexts, as such terms are defined herein. Thus this operating system offers the programmer a hardware abstraction, rather than a data or control abstraction.

Processes are referenced without regard to their physical location via a small set of message-passing primitives. As mentioned earlier, every process has both a unique system-generated identifier and a not necessarily unique name assigned by the programmer. The identifier provides quick direct access, while the name has a limited scope and provides symbolic, indirect access.

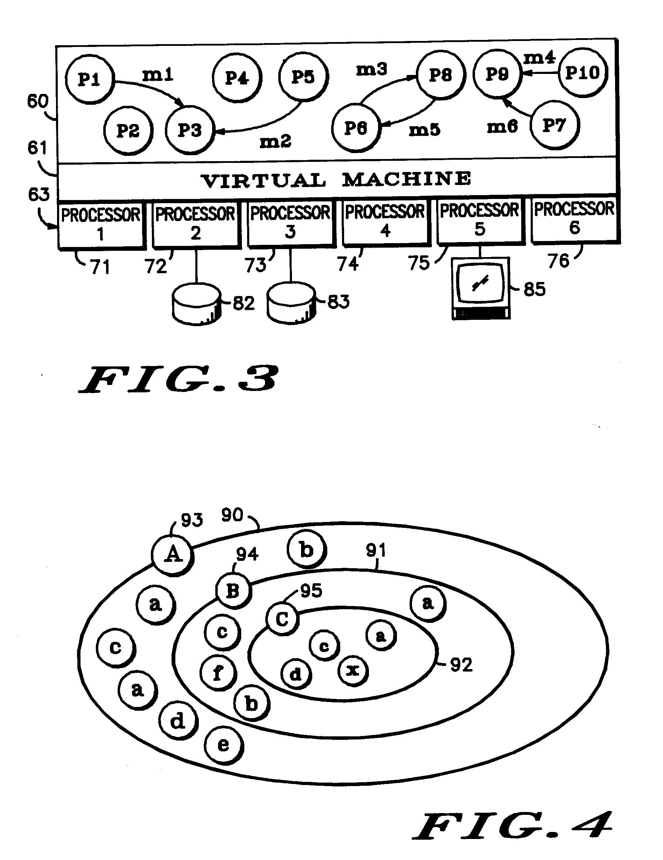

With reference to FIG. 3, an architectural model of the present invention is shown. The bottom, or hardware, layer 63 comprises a number of processors 71-76, as described above. The processors 71-76 may exist physically within one or more cells. The top, or software, layer 60 illustrates a number of processes P1-P10 which send messages m1-m6 to each other. The middle layer 61, labelled "virtual machine", isolates the hardware from the software, and it allows programs to be written as if they were going to be executed on a single processor. Conversely, programs can be distributed across multiple processors without having been explicitly designed for that purpose.

An important purpose of the virtual machine concept herein-disclosed is to provide the applications programmer with a simple, consistent model in which to design his system. This model, as mentioned above, is reduced to several elemental concepts: processes, messages, and contexts. As a consequence of this elemental model, hardware peculiarities are made transparent to the user, and changes in hardware configurations have no direct effect on the software.

### The Virtual Machine

A "process" is a self-contained package of data and executable procedures which operate on that data. The data is totally private and cannot be accessed by other processes. There is no concept of shared memory within the present invention. Execution of a process is strictly sequential. Multiple processes execute concurrently and must be scheduled by the operating system. The processes can be re-entrant, in which case only one copy of the code is loaded even if multiple instances are active.

Every process has a unique "process identifier number" (PID) by which it can be referenced. The PID is assigned by the system when the process is created and remains in effect until the process terminates. The PID assignment contains a randomizing factor which guarantees that the PID will not be re-used in the near future. The contents of the PID are irrelevant to the programmer but are used by the virtual machine to physically locate the process. A PID may be thought of as a "pointer" to a process.

Every process also has a "name" which is a variable-length string of characters assigned by the programmer. A name need not be unique, and this ambiguity may be used to add new services transparently and to aid in fault-tolerance.

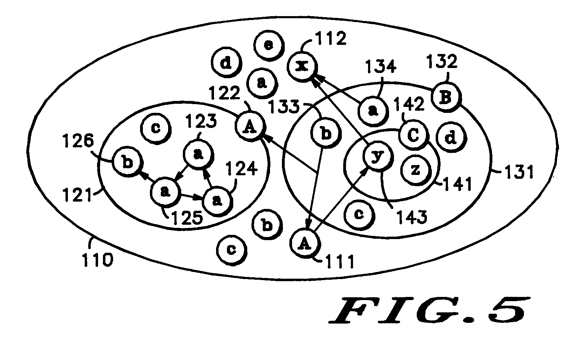

FIG. 4 illustrates that the system-wide name space is partitioned into distinct subsets by means of "contexts" identified by reference numerals 90-92. A context is simply a collection of related processes whose names are not known outside of the context. Context 90, for example, contains processes A, a, a, b, c, d, and e. Context 91 contains processes B, a, b, c, and f. And context 92 contains processes C, a, c, d, and x.

One particular process in each context, called the "context process", is known both within the context and within the immediately enclosing one (referred to as its "parent context"). In the example illustrated in FIG. 4, processes A-C are context processes for contexts 90-92, respectively. The parent context of context 91 is context 90, and the parent context of context 92 is context 91. Conceptually, the context process is located on the boundary of the context and acts as a gate into it.

Processes inside context 92 can reference any processes inside contexts 90 and 91 by name. However, processes in context 91 can only access processes in context 92 by going through the context process C. Processes in context 90 can only access processes in context 92 by going through context processes B and C.

The function of the context process is to filter incoming messages and either reject them or reroute them to other processes in its context. Contexts may be nested, allowing a hierarchy of abstractions to be constructed. A context must reside completely on one cell. The entire system is treated as an all-encompassing context which is always present and which is the highest level in the hierarchy. In essence, contexts define localized protection domains and greatly reduce the chances of unintentional naming conflicts.

If appropriate, a process inside one context can be "connected" to one inside another context by exchanging PID's, once contact has been established through one or the other of the context processes. Most process servers within the present invention function that way. Initial access is by name. Once the desired function (such as a window or file) is "opened", the user process and the service communicate directly via PID's.

A "message" is a variable-length buffer (limited only by the processor's physical memory size) which carries information between processes. A header, inaccessible to the programmer, contains the destination name and the sender's PID. By convention, the first field in a message is a null-terminated string which defines the type of message (e.g., "read", "status", etc.) Messages are queued to the receiving process when they are sent. Queuing ensures serial access and is used in preference to semaphores, monitors, etc.

Messages provide the mechanism by which hardware transparency is achieved. A process located anywhere in the virtual machine can send a message to any other process if it knows its name. Transparency applies with some restrictions across bridgeways (i.e., the interfaces between LAN's operating under identical network protocols) and, in general, not at all across gateways (i.e., the interfaces between LAN's operating under different network protocols) due to performance degradation. However, they could so operate, depending upon the required level of performance.

### Inter-Process Communication

All inter-process communication is via messages. Consequently, most of the virtual machine primitives are concerned with processing messages. The virtual machine kernel primitives are the following:
- ALLOC -: requests allocation of a (message) buffer of a given size.
- FREE -: requests deallocation of a given message buffer.
- PUT -: end a message to a given destination (by name or PID).
- GET -: wait for and dequeue the next incoming message, optionally from a specific process (by PID).
- FORWARD -: pass a received message through to another process.
- CALL -: send a message, then wait for and dequeue the reply.
- REPLY -: send a message to the originator of a given message.
- ANY_MSG -: returns "true" if the receive queue is not empty, else returns "false"; optionally, checks if any messages from a specific PID are queued.

To further describe the function of the kernel primitives, ALLOC handles all memory allocations. It returns a pointer to a buffer which can be used for local storage within the process or which can be sent to another process (via PUT, etc.). ALLOC never "fails", but rather waits until enough memory is freed to satisfy the request.

The PUT primitive queues a message to another process. The sending process resumes execution as soon as the message is queued.

FORWARD is used to quickly reroute a message but maintain information about the original sender (whereas PUT always makes the sending process the originator of the message).

REPLY sends a message to the originator of a previously received message, rather than by name or PID.

CALL essentially implements remote subroutine invocations, causing the caller to suspend until the receiver executes a REPLY. Subsequently, the replied message is dequeued out of sequence, immediately upon arrival, and the caller resumes execution.

The emphasis is on concurrency, so that as many processes as possible are executed in parallel. Hence neither PUT nor FORWARD waits for the message to be delivered. Conversely, GETS suspends a process until a message arrives and dequeues it in one operation. The ANY_MSG primitive is provided so that a process may determine whether there is anything of interest in the queue before committing itself to a GET.

When a message is sent by name, the destination process must be found in the name space. The search path is determined by the nesting of the contexts in which the sending process resides. From a given process, a message can be sent to all processes in its own context or (optionally) to those in any higher context. Refer to FIG. 5. The contexts are searched from the current one upward until a match is found or until the system context is reached. All processes with the same name in that context are then queued a copy of the message.

For example, with reference to FIG. 5, assume that in context 141 process y sends a message to ALL processes by the name x. Process y first searches within its own context 141 but finds no process x. The process y searches within the next higher context 131 (its parent context) but again finds no process x. Then process y searches within the next higher context 110 and finds a process x, identified by reference numeral 112. Since it is the only process x in context 110, it is the only recipient of the message from process y.

If process a in context 131 sends a message to ALL processes by the name x, it first searches within its own context 131 and, finding no processes x there, it then searches within context 110 and finds process x.

Assume that process b in context 131 sends a message to ALL processes by the name A. It would find process A (111) in context 110, as well as process A (122) which is the context process for context 121.

A process may also send a message to itself or to its context process without knowing either name explicitly.

The concept of a "logical ring" (analogous to a LAN) allows a message to be sent to the NEXT process in the system with a given name. The message goes to exactly one process in the sender's context, if such a process exists. Otherwise the parent context is searched.

The virtual machine guarantees that each NEXT transmission will reach a different process and that eventually a transmission will be sent to the logically "first" process (the one that sent the original message) in the ring, completing the loop. In other words, all processes with the same name at the same level can communicate with each other without knowing how many there are or where they are located. The logical ring is essential for distributing services such as a data base. The ordering of processes in the ring is not predictable.

For example, regarding FIG. 5, if process a (125) in context 121 sends a message to process a using the NEXT primitive, the search finds a first process a (124) in the same context 121. Process a (124) is marked as having received the message, and then process a (124) sends the message on to the NEXT process a (123) in context 121. Process a (123) is marked as having received the message, and then it sends the message on to the NEXT process a, which is the original sender process a (125), which knows not to send it further on, since it's been marked as having already received the message.

Sending messages directly by PID obviates the need for a name search and ignores context boundaries. This is known as the DIRECT mode of transmission and is the most efficient. For example, process A (111) sends a message in the DIRECT mode to process y in context 141.

If a process sends a message in the LOCAL transmission mode, it sends it only to a process having the given name in the sender's own context.

In summary, including the DIRECT transmission mode, there are five transmission modes which can be used with the PUT, FORWARD, and CALL primitives:
- ALL -: to all processes with the given name in the first context which contains that name, starting with the sender's context and searching upwards through all parent contexts.
- LOCAL -: to all processes with the given name in the sender's context only.
- NEXT -: to the next process with the given name in the same context as the sender, if any; otherwise it searches upwards through all parent contexts until the name is found.
- LEVEL -: sends to "self" (the sending process) or to "context" (the context process corresponding to the sender's context); "self" cannot be used with CALL primitive.
- DIRECT -: sent by PID.

Messages are usually transmitted by queueing a pointer to the buffer containing the message. A message is only copied when there are multiple destinations or when the destination is on another cell.

Further description of the ALL and NEXT transmission modes is found below in the section entitled *DETAILED DESCRIPTION OF INVENTION.*

### Operating System

The operating system of the present invention consists of a kernel, which implements the primitives described above, plus a set of processes which provide process creation and termination, time management (set time, set alarm, etc.) and which perform cell start-up and configuration. Drivers for devices are also implemented as processes (EESP's), as described above. This allows both system services and device drivers to be added or replaced easily. The operating system also supports swapping and paging, although both are invisible to applications software.

Unlike known distributed computer systems, that of the present invention does not use a distinct "name server" process to resolve names. Name searching is confined to the kernel, which has the advantage of being much faster.

A minimal bootstrap program resides permanently (in ROM) on every cell, e.g. ROM 28 in cell N of FIG. 2. The bootstrap program executes automatically when a cell is powered up and begins by performing basic on-board diagnostics. It then attempts to find and start an initial system code module which comprises the entire kernel, and EESP's for the clock, disk (if required), and NIM (if required). The module is sought on the first disk drive on the cell, if any. If there isn't a disk, and the cell is on the LAN, a message will be sent out requesting the module. Failing that, the required software must be resident in ROM. System services for the clock and for process creation, an initialization program, and a minimal file system, are also built into the module. The initialization program sets up all of the kernel's internal tables and then calls predefined entry points in each of the preloaded services (file management, etc.). The net result is that EESP's for the attached devices are scheduled to run, and the cell is available.

In general, there exists a template file describing the initial software and hardware for each cell in the system. The template defines a set of initial processes (usually one per service) which are scheduled immediately after the cell start-up. These processes then start up their respective subsystems. A cell configuration service on each cell sends configuration messages to each subsystem when it is being initialized, informing it of the devices it owns. Thereafter, similar messages are sent whenever a new device is added to the cell or a device fails or is removed from the cell.

Thus there is no well-defined meaning for "system up" or "system down" - as long as any cell is active, the system as a whole may be considered to be "up". Cells can be shut down or started up dynamically without affecting other cells on the network. The same principle applies, in a limited sense, to peripherals. Devices which can identify themselves with regard to type, model number, etc. can be added or removed without operator intervention. The operating system cannot maintain a global status of the system, nor does it attempt to centralize control of the entire system.

### DETAILED DESCRIPTION OF THE INVENTION

FIG. 6 shows a conceptual view of the local area network (LAN), including several cells, and a representational view of a network interface module (NIM). The LAN 404 couples representative cells 1, 2, . . . N (400-402). Cell 2 (401) illustrates further aspects of the invention. A network interface module (NIM) 406 is illustrated in block diagram form as comprising, among other things, a resident process name cache 440 and a non-resident process name cache 441. The NIM 406 also comprises the kernel, shown generally as 408, and at least one memory store 410, which contains at least one process. In FIG. 6, memory store 410 is shown as containing representative processes B, F, and C. Every other cell coupled to LAN 404 also comprises a NIM like NIM 406 of cell 2 (401).

FIG. 7A shows a representation of the NIM's non-resident process name cache 441. The cache is a high speed memory comprising a plurality of addressable memory locations. Each location has at least three fields, as shown by a representative cache word 414, including field 433 containing the process name, field 434 containing the address of the next cell in the LAN where this process is located, and field 435 containing the "discovery in process" (DIP) flag. The operation of the NIM's non-resident process name cache will be discussed further below.

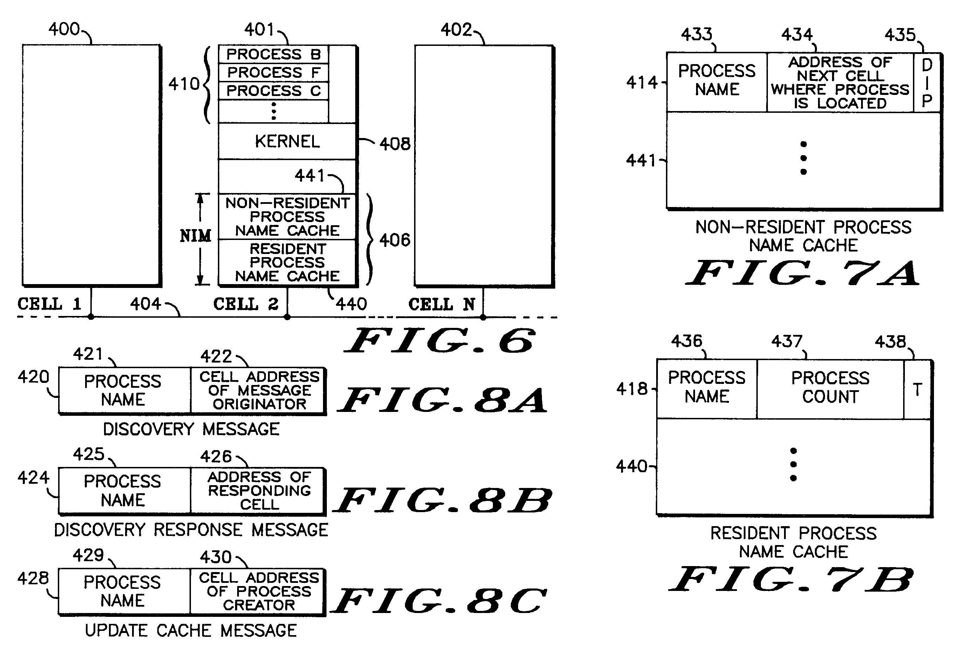

FIG. 7B shows a representation of the NIM's resident process name cache 440. Each cache word comprises at least three fields: field 436 containing the process name, field 437 containing the process count, and the "transmitted" (T) flag. The operation will be discussed further below.

FIG. 8A shows the format of the discovery message 420. The discovery message 420 includes at least a portion 421 containing the process name, and a portion 422 containing the address of the cell originating the message.

FIG. 8B shows the format of the discovery response message 424. The discovery response message 424 includes at least a portion 425 containing the process name, and a portion 426 containing the address of the responding cell.

FIG. 8C shows the format of the update cache message 428. The update cache message 428 includes at least a portion 429 containing the process name, and a portion 430 containing the address of the cell creating the process.

### OPERATION OF PREFERRED EMBODIMENT

### NEXT and ALL Message Transmission Modes

As described above, processes may be addressed (wherever they reside in the system) symbolically by process name. Process names are not required to be unique within the system. Two special message transmission, or addressing, modes are provided to transmit messages between any given process and any named process: NEXT-mode and ALL-mode.

In NEXT-mode addressing, the destination process is specified by name and is searched first within the sender's context level (i.e. among all brother processes, regardless if the sender is a context or not). If none is found, the search continues in the parent context, then in the parent's parent context, etc. The first process with the specified name in the first context level where at least one match is found will receive the message.

A special case of the NEXT-mode addressing is where the destination process' name is the same as the sender process' name, in which case: (1) if the sender is the only process with the specified name in its context, it will also be the receiver of the message, and (2) if there are several processes with the specified name in the same context, each will receive the message.

The kernel may implement a logical chain of same-named processes within a cell. The NIM provides the link that forms the chain into a logical ring, connecting different cells. If all processes in the chain in one cell have received the message, the message is passed to the NIM for transmission across the LAN to the next process with the same name, wherever it may reside.

The NEXT-mode message format includes a field designated as the "accepted" flag. Transmission of a NEXT-mode message is considered successful if it returns to the originating cell with its "accepted" flag set to true. Acceptance means that at least one process with the given name has received the message (NEXT-mode messages to be transmitted are always passed to the NIM unaccepted). In this case, the message is simply freed. If the message could not be sent or returns without being accepted, the transmission is considered to have failed. Failure of the message to return will result in its retransmission. If the message was sent in the logical ring mode (i.e., forwarded by a process to another process with the same name), the message is returned to this process to complete the ring. Otherwise, it is passed to the kernel with transmission error indicated.

In ALL-mode addressing, the destination process is also specified by name. It is searched for in the sender's context first (i.e., among the sender's children if the sender is a context, and among its brothers otherwise). If none is found, the search continues in the parent context, then in the parent's parent context, etc. All processes with the specified name in the first context level where at least one match is found will receive the message (except the sender if it happens to have the same name).

All ALL-mode messages are passed to the NIM for transmission to all, if any, processes residing in other cells on the LAN.

The ALL-mode message format also includes a field designated as the "accepted" flag (an ALL-mode message will be accepted only if one or more processes with the addressed name reside on the originating cell). Transmission of an ALL-mode message is considered successful if it returns to the originating cell with its "accepted" flag set true. In this case, the message is freed. If the message could not be sent, or returns without being accepted, or fails to return at all, the transmission is considered to have failed, and it is passed to the kernel with a transmission error indicated.

If the ALL-mode message returns to its originating cell with its "accepted" flag set true, the originating cell is assured that all processes with the addressed name have actually received the message.

### Non-Resident Process Discovery and Caching

When the NIM receives a message from the kernel to be transmitted to a named process residing on another cell, it must determine which cell to send it to. Each NIM thus maintains a cache of non-resident process names (cache 441, FIG. 7A). This cache is a dynamic table consisting of a number of records each of which comprises three field: the process name 433, the address 434 of the next cell in which the process resides, and a "discovery-in-progress" (DIP) flag 435.

It is important to note that each NIM knows the address of only the "next" cell containing the named process (the "next" cell may not be the closest cell physically to the NIM). This requires that the cells comprising the system be viewed as forming a logical ring. All messages that are propagated from cell-to-cell such as "discovery" messages (discussed below) are passed in one direction around this logical ring.

Another important point is that the non-resident process name cache 441 of any given cell contains only the names of the processes to which that cell wishes to transmit messages. The contents of the cache are dynamic, in that process names may be added or deleted.

When the NIM receives a message to be transmitted to a named process, it searches its non-resident process name cache 441 for the process name. If it's not found, as will be the case initially on power-up (since the cache is empty), it is necessary to locate or "discover" the process' residency.

The process name is registered in a queue in the LAN, and the DIP flag 435 is set true. The message is placed into a holding queue awaiting completion of the discovery. All other messages addressed to the same process while discovery of the process is in progress are also placed into the holding queue.

The LAN then builds a discovery message (420, FIG. 8A). The essential elements of the discovery message are the name of the process being discovered and the address of the message originator. The discovery message is sent to the first cell in the logical ring.

(However, if a logical ring has not yet been established, then the message transmission is terminated, since it is unknown when, if ever, a ring will be formed. Unaccepted messages are returned to the kernel with a transmission error status. Accepted messages are freed. Since the whereabouts of the process has not been determined, the address recorded in the non-resident process name cache table 441 is set to the cell's own address.)

After the discovery message has been successfully sent to the next cell, the message is placed in a timeout queue awaiting either the return of the discovery message or the receipt of a discovery response message (424, FIG. 8B). If a timeout occurs, this indicates that a cell failed before propagating the discovery message, and the discovery message must be retransmitted. If the discovery message returns to the originating cell, then the process does not currently exist in any other cell on the LAN. The discovery message is dequeued from the timeout queue on receipt of either the returning discovery message or the corresponding discovery response message.

When a NIM receives a discovery message off the LAN, it searches its resident process name cache for the name in the message. If it finds it, the discovery message is then transformed into a discovery response message, which identifies the resonding cell and is sent to the message originator. If, however, the process doesn't exist in this cell, the discovery message is sent to the next cell in the logical ring. The message is propagated in this way until either it is received by a cell with the named process or it returns to the originating cell.

If the discovery message returns to the originating cell indicating the named process doesn't exist externally, an invalid cell address indicating the process doesn't exist externally is placed in the process' record in the non-resident process name cache table. Since discovery has been completed, the DIP flag is set to false. All messages addressed to the named process are dequeued from the holding queue. Messages that were originated by another cell are returned to that cell. Messages which were originated by this cell are either returned to the kernel with a transmission error indicated or are simply freed.

If a discovery response message is received by a NIM, the address of the responding cell is recorded in the non-resident process name cache table, and the DIP flag is set to false, since the discovery has been completed. All messages addressed to the discovered process are dequeued from the holding queue and sent to the cell that responded. These messages are placed in a timeout queue upon successful transmission to the cell to await their return.

When a NIM receives an ALL-mode or NEXT-mode message addressed to it off the LAN, it searches its resident process name cache (440, FIG. 7B) for the name of the addressed process. If it's not found, the message is returned to the sender. This happens, for example, if the process has been deleted. On receipt of the rejected message the sending NIM must rediscover the address of the next cell containing the process and update its non-resident process name cache.

If the name is found in the resident process name cache, the message is passed to the addressed process through the kernel. If the message has not already been accepted the NIM must wait for the kernel to indicate whether the message was accepted. This is required since there exists a time window between the checking of the resident process name cache and the kernel being handed the message during which the process may be deleted.

NEXT-mode messages are always passed to the NIM with the "accepted" flag set false. So the NIM at the receiving end must always wait for the kernel to indicate its acceptance. On receipt of this response from the kernel, the message is returned to the originator. If the message was accepted, the originator will dequeue it from the timeout queue and consider the transmission successful. If, however, the message was not accepted due to the process having been deleted, the originating NIM will attempt to rediscover the process' location.

An ALL-mode message may be immediately propagated to the next cell containing the named process only if the message has already been accepted. If the message has not been accepted, its propagation must be delayed until the kernel has indicated whether it was accepted.

Both NEXT-mode and ALL-mode messages eventually return to the originating cell. If a cell fails before propagating the message, the originating cell will time out. NEXT-mode messages will be transmitted. An ALL-mode message, however, cannot be retransmitted, since it is not known which cells received the message and which did not. Depending upon whether the message was accepted, it is either freed or returned to the kernel with a transmission error status.

### Process Creation and Deletion

Whenever a process is created or deleted, the kernel informs the NIM. The NIM maintains its own resident process name cache, which is a dynamic table consisting of one record per resident process name. Each record has three fields: the name of the process, a process count, and a "transmitted" flag (refer to FIG. 7B).

Whenever a process is created, the cache is searched for the name. If it's not found, a record is entered for the process with the count set to one and the transmitted flag set to false. If the name is already in the resident process name cache, the process count is simply incremented.

When a process is deleted, the count in the record corresponding to the process is decremented. When it reaches a value of zero, the named process no longer exists in the cell, and the record is removed from the resident process name cache.

Whenever a new process is created, an update cache message (refer to FIG. 8C) is built and transmitted to the next cell in the logical ring. The transmitted flag is set to true. Once transmitted, the message is placed in a timeout queue awaiting its return.

The update cache message contains the name of the created process and the address of the cell in which it was created. On receipt of such an update cache message, a NIM searches its non-resident process name cache for the process. If found, the non-resident process name cache is updated if the cell containing the new process is closer than the current cell listed which contains this process.

The update cache message is passed from cell to cell around the logical ring until it arrives at the originating cell. Failure of the cell to propagate the message will cause the originating cell to time out and retransmit the message.

No special action is taken on process deletion. A NIM will discover that a process has been deleted from a cell when an ALL-mode of NEXT-mode message sent to that cell is rejected and returned. The sending cell will then attempt to rediscover the process and update its non-resident process name cache.

Program Listings A-E containing a "C" language implementation of the concepts relating to message transmission among processes in a data processing system incorporating the present invention are described in the published application EP-A-0201063.

## Claims

1. A method of locating processes in a distributed data processing system (1), said system comprising a plurality of individual data processing cells (2-7) and at least two processes resident on different ones of said cells, the method comprising the steps of:
(a) generating a request by a first process in a first one of said cells to find the location of a second process not resident on said first cell, the method being characterised by the steps of:
(b) transmitting said request to a different one of said cells;
(c) determining whether said second process is resident on said one different cell;
(d) if said second process is resident on said one different cell, informing said first cell of the location of said one different cell; and
(e) if said second process is not resident on said one different cell, repeating steps (b) and (c) until either the location of said second process is found, in which case the first cell is informed of the location of said one different cell, or until all other cells in the system have been queried without finding the location of said second process, in which case the first cell is informed that the second process cannot be found.

2. A method of locating processes in a distributed data processing system (1), said system comprising a plurality of individual data processing cells (2-7) and at least two processes resident on different ones of said cells, the method comprising the steps of:
(a) providing in at least one of said cells a table of non-resident processes (441);
(b) generating a request by a first process in a first one of said cells to find the location of a second process not resident on said first cell and identified only by name, the method being characterised by the steps of:
(c) transmitting said request to a different one of said cells;
(d) determining whether said second process is resident on said one different cell:
(e) if said second process is resident on said one different cell, storing the location of said one different cell in said table; and
(f) if said second process is not resident on said one different cell, repeating steps (c) and (d) until either the location of said second process is found, in which case the location of said one different cell is stored in said table, or until all other cells in the system have been queried without finding the location of said second process, in which case the first cell is informed that the second process cannot be found.

3. The method of locating processes in accordance with claim 2 wherein said table contains only one entry (414) for said second process.

4. The method of locating processes in accordance with claim 3 wherein each entry in said table comprises a first portion (433) indicating the name of a process and a second portion (434) indicating the location of a cell where said process is resident.

## Patentansprüche

1. Verfahren zur Lokalisierung von Prozessen in einem verteilten Datenverarbeitungssystems (1), wobei das System eine Mehrzahl einzelner Datenverarbeitungszellen (2-7) und mindestens zwei Prozesse umfaßt, die auf verschiedenen der Zellen residieren. Das Verfahren umfaßt die Schritte:
(a) Erzeugen einer Anfrage durch einen ersten Prozeß in einer ersten der Zellen, um den Ort eines zweiten Prozesses zu finden, der nicht auf der ersten Zelle residiert, wobei das Verfahren ***gekennzeichnet*** ist durch die Schritte:
(b) Übermitteln der Anfrage an eine verschiedene der Zellen;
(c) Bestimmen, ob der zweite Prozeß auf der einen verschiedenen Zelle resident ist;
(d) wenn der zweite Prozeß auf der einen verschiedenen Zelle resident ist, Informieren der ersten Zelle über den Ort der einen verschiedenen Zelle; und
(e) wenn der zweite Prozeß nicht auf der einen verschiedenen Zelle resident ist, Wiederholen der Schritte (b) und (c), bis entweder der Ort des zweiten Prozesses gefunden ist, in welchem Fall die erste Zelle über den Ort der einen verschiedenen Zelle informiert wird, oder bis alle anderen Zellen in dem System abgefragt wurden, ohne den Ort des zweiten Prozesses zu finden, in welchem Fall die erste Zelle informiert wird, daß der zweite Prozeß nicht gefunden werden kann.

2. Verfahren zur Lokalisierung von Prozessen in einem verteilten Datenverarbeitungssystems (1), wobei das System eine Mehrzahl einzelner Datenverarbeitungszellen (2-7) und mindestens zwei Prozesse umfaßt, die auf verschiedenen der Zellen residieren. Das Verfahren umfaßt die Schritte:
(a) Bereitstellen in mindestens einer der Zellen eine Tabelle von nicht-residenten Prozessen (441);
(b) Erzeugen einer Anfrage durch einen ersten Prozeß in einer ersten der Zellen, um den Ort eines zweiten Prozesses zu finden, der nicht auf der ersten Zelle residiert und nur mit Namen identifiziert ist, wobei das Verfahren ***gekennzeichnet*** ist durch die Schritte:
(c) Übermitteln der Anfrage an eine verschiedene der Zellen;
(d) Bestimmen, ob der zweite Prozeß auf der einen verschiedenen Zelle resident ist;
(e) wenn der zweite Prozeß auf der einen verschiedenen Zelle resident ist, Speichern des Ortes der einen verschiedenen Zelle in der Tabelle; und
(f) wenn der zweite Prozeß nicht auf der einen verschiedenen Zelle resident ist, Wiederholen der Schritte (c) und (d), bis entweder der Ort des zweiten Prozesses gefunden ist, in welchem Fall der Ort der einen verschiedenen Zelle in der Tabelle gespeichert wird, oder bis alle anderen Zellen in dem System abgefragt wurden, ohne den Ort des zweiten Prozesses zu finden, im welchem Fall die erste Zelle informiert wird, daß der zweite Prozeß nicht gefunden werden kann.

3. Verfahren zum Lokalisieren von Prozessen nach Anspruch 2, worin die Tabelle nur einen Eintrag (414) für den zweiten Prozeß enthält.

4. Verfahren zum Lokalisieren von Prozessen nach Anspruch 3, worin jeder Eintrag in der Tabelle einen ersten Teil (433) umfaßt, der den Namen eines Prozesses anzeigt, und einen zweiten Teil (434) umfaßt, der den Ort einer Zelle anzeigt, wo der Prozeß resident ist.

## Revendications

1. Un procédé de localisation de processus dans un système informatique réparti (1), ce système comprenant un ensemble de cellules de traitement de données individuelles (2-7), et au moins deux processus qui résident dans différentes cellules, le procédé comprenant les étapes suivantes :
(a) on génère une demande au moyen d'un premier processus dans une première des cellules, pour trouver la position d'un second processus ne résidant pas dans la première cellule, le procédé étant caractérisé par les étapes suivantes :
(b) on émet la demande précitée vers l'une différente des cellules précitées;
(c) on détermine si le second processus réside dans la cellule différente;
(d) si le second processus réside dans la cellule différente, on indique à la première cellule la position de la cellule différente; et
(e) si le second processus ne réside pas dans la cellule différente, on répète les étapes (b) et (c) jusqu'à ce que l'on trouve la position du second processus, auquel cas on indique à la première cellule la position de la cellule différente, ou jusqu'à ce que toutes les autres cellules dans le système aient été interrogées sans trouver la position du second processus, auquel cas on indique à la première cellule que le second processus ne peut pas être trouvé.

2. Un procédé de localisation de processus dans un système informatique réparti (1), ce système comprenant un ensemble de cellules de traitement de données individuelles (2-7) et au moins deux processus qui résident dans des cellules différentes parmi les cellules précitées, le procédé comprenant les étapes suivantes :
(a) on établit dans l'une au moins des cellules une table de processus non résidents (441);
(b) on génère une demande au moyen d'un premier processus, dans une première des cellules, pour trouver la position d'un second processus ne résidant pas dans la première cellule et qui est identifié seulement par son nom, le procédé étant caractérisé par les étapes suivantes :
(c) on émet la demande vers l'une différente des cellules précitées;
(d) on détermine si le second processus réside dans la cellule différente;
(e) si le second processus réside dans la cellule différente, on enregistre la position de cette cellule différente dans la table précitée; et
(f) si le second processus ne réside pas dans la cellule différente, on répète les étapes (c) et (d) jusqu'à ce que la position du second processus soit trouvée, auquel cas on enregistre dans la table la position de la cellule différente, ou jusqu'à ce que toutes les autres cellules dans le système aient été interrogées sans trouver la position du second processus, auquel cas on indique à la première cellule que le second processus ne peut pas être trouvé.

3. Le procédé de localisation de processus selon la revendication 2, dans lequel la table contient un seul article (414) pour le second processus.

4. Le procédé de localisation de processus selon la revendication 3, dans lequel chaque article dans la table comprend une première partie (433) qui indique le nom d'un processus, et une seconde partie (434) qui indique la position d'une cellule dans laquelle ce processus réside.
